# FASCICULE DE BREVET EUROPEEN

(11) **EP 2 804 831 B1**
(45) Date de publication et mention de la délivrance du brevet: **12.10.2016**
(21) Numéro de dépôt: 13701017.9
(22) Date de dépôt: 17.01.2013
(51) Int. Cl.: B67D 1/08

(54) **DISPOSITIF DE CIRCULATION D'UN FLUIDE CALOPORTEUR AUTOUR D'UN TUYAU DE TRANSPORT DE FLUIDE, KIT POUR LA RÉALISATION ET PROCÉDÉ D'INSTALLATION D'UN TEL DISPOSITIF**
VORRICHTUNG ZUM ZIRKULIEREN EINER WÄRMEÜBERTRAGUNGSFLÜSSIGKEIT UM EIN FLÜSSIGKEITSFÜHRENDES ROHR, KIT ZUR HERSTELLUNG DIESER VORRICHTUNG UND INSTALLATIONSVERFAHREN DAFÜR
DEVICE FOR CIRCULATING A HEAT TRANSFER FLUID AROUND A FLUID-TRANSPORTING PIPE, KIT FOR PRODUCING SAID DEVICE AND METHOD FOR INSTALLING SAME

(30) Priorité: 19.01.2012 FR 1250547
(43) Date de publication de la demande: 26.11.2014
(73) Titulaire: Parker Hannifin Manufacturing France SAS, 74112 Annemasse (FR)
(72) Inventeur: LE QUERE, Philippe, F-35830 Betton (FR)
(74) Mandataire: Lavialle, Bruno François Stéphane
(86) Numéro de dépôt international: PCT/EP2013/050867
(87) Numéro de publication internationale: WO 2013/107830

(56) Documents cités:
- EP-A1- 1 084 989
- WO-A1-2011/047475
- DE-A1-102004 035 955
- DE-U1- 20 209 897
- GB-A- 1 093 579

## Description

La présente invention concerne un dispositif de circulation d'un fluide autour d'un tuyau, un kit pour la réalisation et un procédé d'installation d'un tel dispositif.

L'invention concerne plus particulièrement la distribution de liquides périssables et notamment des liquides alimentaires tels que la bière, les sodas, l'eau...

Dans un débit de boissons, la bière est généralement stockée dans des fûts disposés dans la cave et reliés par des tuyaux en matière plastique à des robinets de tirage montés sur le comptoir. Un ensemble de réfrigération est normalement installé dans la cave pour refroidir la bière sortant des fûts et l'amener à une température de consommation préconisée généralement à 3°C par le brasseur. La température basse de la bière doit être ensuite maintenue au mieux jusqu'à la sortie des robinets de tirage. Or, le comptoir et la cave sont fréquemment distants de plusieurs mètres parcourus par les tuyaux reliant les fûts aux robinets de tirage.

Entre deux clients consommateurs, la bière contenue dans les tuyaux (équivalent à un ou deux verres par tuyau) se réchauffe et sa température de sortie aux robinets devient très rapidement supérieure aux 3°c maximum préconisés par les brasseurs, ce qui va à l'encontre des habitudes de consommation de la bière.

Il existe des lignes dites « python » permettant un maintien assez satisfaisant de la basse température de la bière sortant du groupe froid. Dans une telle ligne, les différents tuyaux de bière sont regroupés en un faisceau au centre duquel coure un tube aller-retour dans lequel circulera de l'eau glacée provenant de l'ensemble de réfrigération. Ce faisceau est ensuite serré d'un strap et est thermiquement isolé au moyen d'une gaine de mousse. L'échange thermique est réalisé par contact des tuyaux et tubes entre eux.

D'autres systèmes de refroidissement plus efficaces sont apparus. Dans ceux-ci, le tuyau de bière s'étend dans un premier tube qui est entouré d'une gaine thermiquement isolante et qui possède un diamètre interne supérieur au diamètre externe du tuyau de bière pour ménager entre ceux-ci un espace de circulation d'une eau réfrigérée en provenance de l'ensemble de réfrigération. L'eau réfrigérée est ensuite évacuée vers l'ensemble de réfrigération par un second tube qui est raccordé en sortie du premier tube et qui s'étend côte-à-côte avec le premier tube. Le maintien en température est alors très satisfaisant quel que soit le temps écoulé entre deux tirages. Toutefois, la position des tubes empêche l'introduction d'une partie du dispositif dans la colonne creuse supportant généralement le robinet de tirage.

Sur le même principe, il est connu du document US4676400 un tel système dans lequel le second tube s'étend autour du premier tube. Ceci assure encore une meilleure isolation thermique du tuyau de bière vis-à-vis de l'extérieur. Toutefois, dans ce système, les impératifs de raccordement du premier tube et du deuxième tube au circuit d'eau réfrigérée impose que ceux-ci aient des longueurs différentes adaptées au lieu dans lequel le dispositif est installé. La découpe des tubes à longueur est généralement réalisée sur place et est compliquée par une courbure résiduelle des tubes qui sont généralement livrés enroulés. Or, la précision de la longueur des tubes est une garantie de leur assemblage correct et fiable, ainsi que de l'étanchéité de leur raccordement au circuit d'eau réfrigérée.

Le document GB 1 093 579 divulgue un dispositif de circulation de liquide caloporteur dans lequel deux tubes coaxiaux permettent permettent la circulation dudit liquide.

Un but de l'invention est de faciliter l'installation d'un dispositif de circulation d'un fluide caloporteur autour d'un tuyau de transport de liquide.

A cet effet, on prévoit, selon l'invention, un dispositif de circulation d'un fluide caloporteur autour d'un tuyau de transport de fluide, comportant un tube intérieur et un tube extérieur qui sont coaxiaux et sensiblement de mêmes longueurs, un premier raccord ayant un corps tubulaire agencé pour entourer de manière étanche une portion du tuyau et pour recevoir des premières extrémités des tubes en maintenant un décalage axial entre les tubes de manière à définir de façon étanche un premier conduit de circulation entre le tube intérieur et le tuyau et un deuxième conduit de circulation entre les tubes, et un deuxième raccord agencé pour entourer de manière étanche une portion du tuyau et coopérant avec des deuxièmes extrémités des tubes pour mettre en communication le premier conduit avec le deuxième conduit, l'un des raccords comportant des moyens de raccordement du premier conduit et du deuxième conduit à un circuit de fluide caloporteur.

Ainsi, les tubes doivent être découpés à la même longueur, ce qui peut être réalisé de préférence par une opération de découpe simultanée des deux tubes. Il est en outre possible de réaliser la découpe des tubes successivement en prenant le premier tube découpé comme gabarit pour la découpe de l'autre tube. La découpe est de la sorte facilitée et peut être réalisée avec plus de précision.

De préférence, le corps du premier raccord comprend des moyens de butée agencés de telle manière que la première extrémité du tube intérieur s'étende en saillie axiale de la première extrémité du tube extérieur.

Le corps du premier raccord a alors une géométrie relativement simple et peut être plus facilement fabriqué.

Avantageusement alors, le deuxième raccord est un bouchon annulaire agencé pour être engagé dans la deuxième extrémité du tube extérieur en constituant une butée pour la deuxième extrémité du tube intérieur pour maintenir le décalage axial entre les tubes.

Le deuxième raccord a alors lui aussi une structure particulièrement simple. En outre, cette structure est compacte et n'augmente pas l'encombrement radial du dispositif permettant notamment l'introduction de la partie correspondante du dispositif dans la colonne creuse usuellement utilisée pour supporter le robinet de tirage.

L'invention a également pour objet un kit pour la réalisation d'un tel dispositif.

L'invention concerne enfin un procédé d'installation d'un tel dispositif, qui comprend les étapes de :
- couper les tubes à bonne longueur alors que le tube intérieur s'étend dans le tube extérieur,
- engager le tuyau dans le premier raccord, le tube intérieur et le deuxième raccord pour définir le premier conduit et le deuxième conduit,
- raccorder le raccord au circuit de fluide caloporteur.

L'installation du dispositif est alors rendue aisée par la découpe des tubes qui est réalisée simultanément pour les deux tubes alors que les tubes sont l'un dans l'autre.

D'autres caractéristiques et avantages de l'invention ressortiront à la lecture de la description qui suit de modes de réalisation particuliers non limitatifs de l'invention.

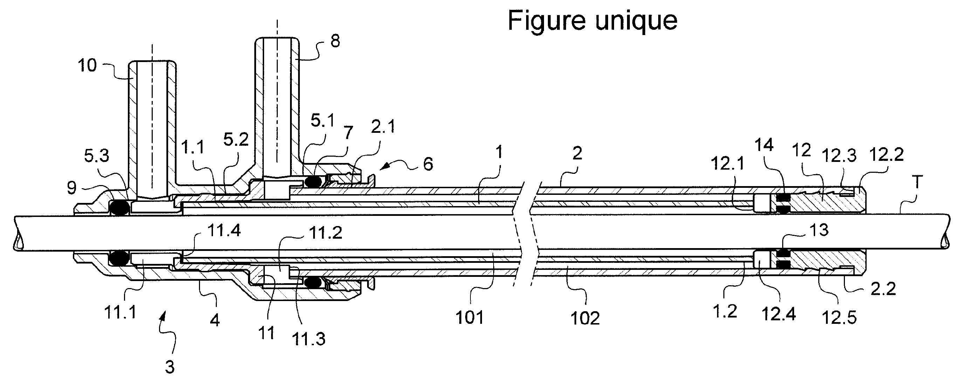

Il sera fait référence à la figure annexée représentant schématiquement en coupe un dispositif conforme à l'invention.

En référence à la figure, le dispositif de l'invention est destiné la circulation d'un fluide caloporteur, par exemple de l'eau réfrigérée, autour d'un tuyau T de transport de fluide, par exemple un liquide alimentaire comme une boisson plate ou gazeuse telle que de la bière, un soda... L'eau réfrigérée est transportée par un circuit reliant le dispositif à un ensemble de réfrigération non représenté sur la figure.

Le dispositif comporte un tube intérieur 1 et un tube extérieur 2 qui sont coaxiaux et sensiblement de mêmes longueurs. Le tube intérieur 1 a un diamètre interne supérieur à un diamètre externe du tuyau T pour ménager entre eux un espace de circulation du fluide caloporteur et le tube extérieur 2 a un diamètre interne supérieur à un diamètre externe du tube intérieur 1 pour ménager entre eux un espace de circulation du fluide caloporteur. Les tubes 1, 2 comportent de préférence au moins une portion en un matériau isolant thermiquement.

Un premier raccord 3 ayant un corps tubulaire 4 agencé pour entourer de manière étanche une portion du tuyau T et pour recevoir des premières extrémités 1.1, 2.1 des tubes 1, 2 en maintenant un décalage axial entre les tubes 1, 2 de manière à définir de manière étanche un premier conduit de circulation 101 entre le tube intérieur 1 et le tuyau T et un deuxième conduit de circulation 102 entre les tubes 1, 2.

Plus précisément, le corps tubulaire 4 délimite un canal comprenant de façon axialement successive un tronçon d'entrée 5.1, un tronçon intermédiaire 5.2 et un tronçon terminal 5.3.

Le tronçon d'entrée 5.1 est agencé pour recevoir la première extrémité 2.1 du tube extérieur 2 et est pourvu de moyens d'y assujettir de façon étanche ladite première extrémité 2.1. Les moyens d'assujettissement comprennent des moyens de connexion instantanée, connus en eux-mêmes et généralement désignés en 6, et un joint annulaire d'étanchéité 7 adjacent aux moyens de connexion instantanée 6 et dimensionné pour être comprimé entre une surface externe du tube extérieur 2 et une paroi du logement d'entrée 5.1. Une conduite d'évacuation 8 de l'eau réfrigérée s'étendant en saillie à l'extérieur du corps tubulaire 4 débouche dans le tronçon d'entrée 5.1 entre le tronçon intermédiaire 5.2 et le joint d'étanchéité 7. La conduite d'évacuation 8 est destinée à être raccordée à la branche retour du circuit d'eau réfrigérée.

Le tronçon terminal 5.3 a un fond, à l'opposé du tronçon intermédiaire 5.2, au voisinage duquel s'étend un joint d'étanchéité 9 dimensionné pour être comprimé entre une surface externe du tuyau T et une paroi du logement terminal 5.3. Une conduite d'amenée 10 de l'eau réfrigérée s'étendant en saillie à l'extérieur du corps tubulaire 4 débouche dans le tronçon terminal 5.3 entre le tronçon intermédiaire 5.2 et le joint d'étanchéité 9. La conduite d'amenée 10 est destinée à être raccordée à la branche aller du circuit d'eau réfrigérée.

Le tronçon intermédiaire 5.2 reçoit de manière serrée une douille 11 agencée pour recevoir de façon serrée la première extrémité 1.1 du tube intérieur 1. La douille 11 a une première portion d'extrémité 11.1 s'étendant dans le tronçon terminal 5.3 pour maintenir le joint d'étanchéité 9 dans son logement. La portion d'extrémité 11.1 comprend des ouvertures permettant le passage de l'eau réfrigérée depuis la conduite d'amenée 10 jusque dans le premier conduit de circulation 101. La douille 11 a une deuxième portion d'extrémité 11.2 s'étendant dans le tronçon d'entrée 5.1 pour maintenir le joint d'étanchéité 7 au voisinage des moyens de connexion instantanée 6. La portion d'extrémité 11.2 comprend des ouvertures permettant le passage de l'eau réfrigérée depuis le deuxième conduit de circulation 102 jusque dans la conduite d'évacuation 8. La deuxième portion d'extrémité 11.2 reçoit la première extrémité 2.1 du tube extérieur 2 et comporte une butée axiale 11.3 s'opposant à l'enfoncement du tube extérieur 2 vers le tronçon intermédiaire 5.2. La douille 11 reçoit la première extrémité 1.1 du tube intérieur 1 et comprend, entre ses portions d'extrémité 11.1, 11.2, une butée axiale 11.4 s'opposant à l'enfoncement du tube intérieur 1 vers le tronçon terminal 5.3. Les butées axiales 11.3, 11.4 maintiennent le décalage axial des tubes 1, 2 de telle manière que la première extrémité 1.1 du tube intérieur 1 s'étende en saillie axiale de la première extrémité 2.1 du tube extérieur 2. De préférence, la douille 11 a une surface intérieure légèrement tronconique pour que l'effort de serrage du tube intérieur 1 augmente avec la profondeur d'enfoncement de celui-ci dans la douille 11.

Le dispositif comprend un deuxième raccord agencé pour entourer de manière étanche une portion du tuyau T et coopérant avec des deuxièmes extrémités 1.2, 2.2 des tubes 1, 2 pour mettre en communication le premier conduit 101 avec le deuxième conduit 102.

Le deuxième raccord est un bouchon 12, de forme annulaire, agencé pour être engagé dans la deuxième extrémité 2.2 du tube extérieur 2 en constituant une butée pour la deuxième extrémité 1.2 du tube intérieur 1 pour maintenir le décalage axial entre les tubes 1, 2. Le bouchon 12 comprend une extrémité 12.1 en contact avec la deuxième extrémité 1.2 du tube intérieur et une deuxième extrémité 12.2 en saillie à l'extérieur du tube extérieur 2 et pourvu d'un épaulement externe 12.3 en contact avec la deuxième extrémité 2.2 du tube extérieur 2. Les butées offertes par la première extrémité 12.1 et l'épaulement 12.3 maintiennent le décalage axial des tubes 1, 2. La première extrémité 12.1 du bouchon 12 est pourvue d'encoches 12.4 ménagées axialement pour permettre un passage de fluide du premier conduit de circulation 101 au deuxième conduit de circulation 102. Le bouchon 12 est pourvu d'une gorge interne et d'une gorge externe recevant chacune un élément annulaire d'étanchéité 13, 14 pour assurer une étanchéité de contact avec le tuyau T et le tube extérieur 2 respectivement. Le bouchon 12 est avantageusement pourvu d'un filetage 12.5 permettant de visser le bouchon 12 dans la deuxième extrémité 2.2 et d'assurer son maintien malgré la pression. En variante, il est possible de prévoir des reliefs de cramponnage (dents annulaires) ou un sertissage du bouchon 12.

Les raccords ont alors une structure simple qui facilite leur réalisation.

L'installation du dispositif va maintenant être détaillée.

Le dispositif est de préférence tout d'abord livré sous la forme d'un kit comportant le premier raccord 3, le deuxième raccord (ici le bouchon 12) et des tubes 1, 2 de mêmes longueurs et de diamètres différents pour la réalisation du dispositif. Le tube 1 est, dans ce kit, déjà engagé dans le tube extérieur 2.

Le procédé d'installation comprend les étapes de :
- couper les tubes à bonne longueur alors que le tube intérieur 1 s'étend dans le tube extérieur 2,
- engager le tuyau T dans le raccord 3, le tube intérieur 1 (toujours reçu dans le tube extérieur 2) et le bouchon 12 pour définir le premier conduit 101 et le deuxième conduit 102,
- raccorder le raccord 3 au circuit de fluide caloporteur.

Il est possible de disposer autour du tube extérieur 2 un manchon de matériau isolant thermiquement pour limiter l'échauffement tant de l'eau réfrigérée que de la bière.

Bien entendu, l'invention n'est pas limitée au mode de réalisation décrit mais englobe toute variante entrant dans le champ de l'invention telle que définie par les revendications.

En particulier, le raccord 3 peut avoir une structure différente de celle décrite, par exemple sans douille 11. Le corps peut alors être obtenu par usinage, ou par soudage ou collage de deux pièces par exemple issues de moulage. Le décalage axial peut être tel que l'extrémité 2.1 est en saillie de l'extrémité 1.1. Les conduites 8, 10 peuvent déboucher axialement dans le corps du raccord 3.

L'étanchéité de la douille 11 avec le corps 4 et/ou le tube 2 peut être assurée par un joint.

Le bouchon 12 peut être agencé pour recevoir l'extrémité 1.2 ou peut être remplacé par un raccord de forme plus compliquée optimisant le passage du fluide d'un conduit à l'autre.

Les moyens d'assujettissement peuvent être des moyens de connexion instantanée d'un autre type que ceux décrits ou des moyens de connexion non instantanée.

Les conduites 8 et 10 peuvent être remplacées par des puits taraudés ou pourvus de moyens de connexion par exemple de type cartouche.

## Revendications

1. Dispositif de circulation d'un fluide caloporteur autour d'un tuyau (T) de transport de fluide, comportant un tube intérieur (1) et un tube extérieur (2) qui sont coaxiaux et sensiblement de mêmes longueurs, un premier raccord (3) ayant un corps tubulaire (4) agencé pour entourer de manière étanche une portion du tuyau et pour recevoir des premières extrémités (1.1, 2.1) des tubes en maintenant un décalage axial entre les tubes de manière à définir de façon étanche un premier conduit de circulation (101) entre le tube intérieur et le tuyau et un deuxième conduit de circulation (102) entre les tubes, et un deuxième raccord (12) agencé pour entourer de manière étanche une portion du tuyau et coopérant avec des deuxièmes extrémités (1.2, 2.2) des tubes pour mettre en communication le premier conduit avec le deuxième conduit, l'un des raccords comportant des moyens de raccordement (8, 10) du premier conduit et du deuxième conduit à un circuit de fluide caloporteur.

2. Dispositif selon la revendication 1, dans lequel le corps (4) du premier raccord (3) comprend des moyens de butée (11.3, 11.4) agencés de telle manière que la première extrémité (1.1) du tube intérieur (1) s'étende en saillie axiale de la première extrémité (2.1) du tube extérieur (2).

3. Dispositif selon la revendication 2, dans lequel le corps (4) délimite un canal comprenant un tronçon d'entrée (5.1) agencé pour recevoir la première extrémité (2.1) du tube extérieur (2) et pourvu des moyens (6, 7) d'y assujettir de façon étanche ladite première extrémité, un tronçon terminal (5.3) pourvu de moyens d'étanchéité (9) avec le tuyau et un tronçon intermédiaire pourvu d'une douille qui est agencée pour recevoir la première extrémité (1.1) du tube intérieur (1) et qui est pourvue des butées (11.3, 11.4) maintenant le décalage axial des tubes (1, 2).

4. Dispositif selon la revendication 3, dans lequel la douille (11) a une portion d'extrémité (11.2) en saillie dans le tronçon d'entrée (5.1) pour recevoir la première extrémité (2.1) du tube extérieur (2).

5. Dispositif selon la revendication 3, dans lequel la douille (11) est agencée pour recevoir avec serrage la première extrémité (1.1) du tube intérieur (1).

6. Dispositif selon la revendication 3, dans lequel les moyens d'assujettissement comprennent des moyens de connexion instantanée (6).

7. Dispositif selon la revendication 2, dans lequel le deuxième raccord est un bouchon (12) annulaire agencé pour être engagé dans la deuxième extrémité (2.2) du tube extérieur (2) en constituant une butée pour la deuxième extrémité (1.2) du tube intérieur (1) pour maintenir le décalage axial entre les tubes.

8. Dispositif selon la revendication 7, dans lequel le bouchon (12) comprend une extrémité (12.1) en contact avec la deuxième extrémité (1.2) du tube intérieur (1), ladite extrémité étant pourvue d'au moins une encoche (12.4) ménagée axialement pour permettre un passage de fluide du premier conduit (101) au deuxième conduit (102).

9. Dispositif selon la revendication 7, dans lequel le bouchon (12) est pourvu d'une gorge interne et d'une gorge externe recevant chacune un élément annulaire d'étanchéité (13, 14) pour assurer une étanchéité de contact avec le tuyau (T) et le tube extérieur (2) respectivement.

10. Dispositif selon la revendication 1, dans lequel au moins le tube extérieur (2) comporte au moins une portion en un matériau isolant thermiquement.

11. Kit comportant un premier raccord (3), un deuxième raccord (12) et des tubes (1, 2) de mêmes longueurs et de diamètres différents pour la réalisation d'un dispositif selon l'une quelconque des revendications précédentes, les tubes étant engagés l'un dans l'autre.

12. Procédé d'installation d'un dispositif selon l'une quelconque des revendications 1 à 10, comprenant les étapes de :
- couper les tubes (1, 2) à bonne longueur alors que le tube intérieur s'étend dans le tube extérieur,
- engager le tuyau (T) dans le premier raccord (3), le tube intérieur (1) et le deuxième raccord (12) pour définir le premier conduit (101) et le deuxième conduit (102),
- raccorder le raccord au circuit de fluide caloporteur.

## Patentansprüche

1. Vorrichtung zur Zirkulation eines Wärmeübertragungsfluids um einen Fluidtransportschlauch (T), umfassend ein Innenrohr (1) und ein Außenrohr (2), die koaxial zueinander sind und im Wesentlichen gleiche Längen haben, einen ersten Anschluss (3), der ein rohrförmiges Gehäuse (4) hat, das so ausgebildet ist, dass es einen Abschnitt des Schlauches auf dichte Weise umgibt und erste Enden (1.1, 2.1) der Rohre aufnimmt, indem ein axialer Versatz zwischen den Rohren beibehalten wird, derart, dass auf dichte Weise eine erste Zirkulationsleitung (101) zwischen dem Innenrohr und dem Schlauch und eine zweite Zirkulationsleitung (102) zwischen den Rohren definiert wird, sowie einen zweiten Anschluss (12), der so ausgebildet ist, dass er einen Abschnitt des Schlauches auf dichte Weise umgibt und mit zweiten Enden (1.2, 2.2) der Rohre zusammenwirkt, um die erste Leitung mit der zweiten Leitung in Verbindung zu bringen, wobei einer der Anschlüsse Anschlussmittel (8, 10) zum Verbinden der ersten Leitung und der zweiten Leitung mit einem Wärmeübertragungsfluidkreis umfasst.

2. Vorrichtung nach Anspruch 1, wobei das Gehäuse (4) des ersten Anschlusses (3) Anschlagmittel (11.3, 11.4) umfasst, die so ausgebildet sind, dass das erste Ende (1.1) des Innenrohres (1) axial aus dem ersten Ende (2.1) des Außenrohres (2) vorsteht.

3. Vorrichtung nach Anspruch 2, wobei das Gehäuse (4) einen Kanal be-grenzt, der einen Einlassabschnitt (5.1) umfasst, der so ausgebildet ist, dass er das erste Ende (2.1) des Außenrohres (2) aufnimmt, und mit Mitteln (6, 7) versehen ist, um daran auf dichte Weise das erste Ende zu befestigen, einen Endabschnitt (5.3), der mit Dichtungsmitteln (9) zur Abdichtung mit dem Schlauch versehen ist, sowie einen Zwischenabschnitt, der mit einer Hülse versehen ist, die so ausgebildet ist, dass sie das erste Ende (1.1) des Innenrohres (1) aufnimmt, und die mit Anschlagen (11.3, 11.4) versehen ist, die den axialen Versatz der Rohre (1, 2) aufrechterhalten.

4. Vorrichtung nach Anspruch 3, wobei die Hülse (11) einen in den Einlassabschnitt (5.1) vorstehenden Endabschnitt (11.2) hat, um das erste Ende (2.1) des Außenrohres (2) aufzunehmen.

5. Vorrichtung nach Anspruch 3, wobei die Hülse (11) so ausgebildet ist, dass sie das erste Ende (1.1) des Innenrohres (1) mit Presspassung aufnimmt.

6. Vorrichtung nach Anspruch 3, wobei die Befestigungsmittel Schnellverbindungsmittel (6) umfassen.

7. Vorrichtung nach Anspruch 2, wobei der zweite Anschluss ein ringförmiger Verschlussstopfen (12) ist, der so ausgebildet ist, dass er in das zweite Ende (2.2) des Außenrohres (2) eingefügt wird und dabei einen Anschlag für das zweite Ende (1.2) des Innenrohres (1) bildet, um den axialen Versatz zwischen den Rohren aufrechtzuerhalten.

8. Vorrichtung nach Anspruch 7, wobei der Verschlussstopfen (12) ein Ende (12.1) in Kontakt mit dem zweiten Ende (1.2) des Innenrohres (1) umfasst, wobei das Ende mit mindestens einer Kerbe (12.4) versehen ist, die axial ausgebildet ist, um einen Fluiddurchlass von der ersten Leitung (101) zur zweiten Leitung (102) zu gestatten.

9. Vorrichtung nach Anspruch 7, wobei der Verschlussstopfen (12) mit einer Innennut und einer Außennut versehen ist, die jeweils ein ringförmiges Dichtungselement (13, 14) aufnehmen, um eine Kontaktrichtung mit dem Schlauch (T) bzw. dem Außenrohr (2) sicherzustellen.

10. Vorrichtung nach Anspruch 1, wobei mindestens das Außenrohr (2) mindestens einen Abschnitt aus einem wärmeisolierenden Material umfasst.

11. Bausatz, umfassend einen ersten Anschluss (3), einen zweiten Anschluss (12) und Rohre (1, 2) mit gleichen Längen und unterschiedlichen Durchmessern zur Herstellung einer Vorrichtung nach einem der vorhergehenden Ansprüche, wobei die Rohre ineinandergesteckt sind.

12. Verfahren zur Installation einer Vorrichtung nach einem der Ansprüche 1 bis 10, umfassend die Schritte:
- Schneiden der Rohre (1, 2) auf eine passende Länge, während sich das Innenrohr in dem Außenrohr erstreckt,
- Einfügen des Schlauches (T) in den ersten Anschluss (3), das Innenrohr (1) und den zweiten Anschluss (12), um die erste Leitung (101) und die zweite Leitung (102) zu definieren,
- Verbinden des Anschlusses mit dem Wärmeübertragungsfluidkreis.

## Claims

1. Device for circulating a heat transfer fluid around a fluid transport pipe (T), including an inner tube (1) and an outer tube (2) which are coaxial and of substantially the same length, a first connector (3) having a tubular body (4) arranged to surround a portion of the pipe in a sealed manner and to receive first ends (1.1, 2.1) of the tubes, maintaining an axial offset between the tubes so as to define in a sealed manner a first flow duct (101) between the inner tube and the pipe and a second flow duct (102) between the tubes, and a second connector (12) arranged to surround a portion of the pipe in a sealed manner and cooperating with second ends (1.2, 2.2) of the tubes for the first duct to communicate with the second duct, one of the connectors including means (8, 10) for connecting the first duct and the second duct to a heat transfer fluid circuit.

2. Device according to Claim 1, in which the body (4) of the first connector (3) includes stop means (11.3, 11.4) arranged such that the first end (1.1) of the inner tube (1) projects axially from the first end (2.1) of the outer tube (2).

3. Device according to Claim 2, in which the body (4) defines a channel including an inlet section (5.1) arranged to receive the first end (2.1) of the outer tube (2) and provided with means (6, 7) for connecting said first end thereto in a sealed manner, an end section (5.3) provided with means (9) for sealing it to the pipe, and an intermediate section provided with a sleeve which is arranged to receive the first end (1.1) of the inner tube (1) and which is provided with stops (11.3, 11.4) for maintaining the axial offset of the tubes (1, 2).

4. Device according to Claim 3, in which the sleeve (11) has an end portion (11.2) projecting into the inlet section (5.1) to receive the first end (2.1) of the outer tube (2).

5. Device according to Claim 3, in which the sleeve (11) is arranged to receive and clamp the first end (1.1) of the inner tube (1).

6. Device according to Claim 3, in which the connecting means include quick connection means (6).

7. Device according to Claim 2, in which the second connector is an annular plug (12) arranged to be engaged in the second end (2.2) of the outer tube (2) to constitute a stop for the second end (1.2) of the inner tube (1) to maintain the axial offset between the tubes.

8. Device according to claim 7, in which the plug (12) includes an end (12.1) in contact with the second end (1.2) of the inner tube (1), said end being provided with at least one notch (12.4) axially arranged to allow fluid to flow from the first duct (101) to the second duct (102).

9. Device according to Claim 7, in which the plug (12) is provided with an inner groove and an outer groove each receiving an annular sealing member (13, 14) for sealing contact with the pipe (T) and the outer tube (2), respectively.

10. Device according to Claim 1, in which at least the outer tube (2) includes at least one portion made of a thermally insulating material.

11. Kit for the production of a device according to any one of the preceding claims, including a first connector (3), a second connector (12) and tubes (1, 2) of same the same length and different diameters, the tubes being engaged one in the other.

12. Method of installing a device according to any one of claims 1 to 10, including the steps of:
- cutting the tubes (1, 2) to length with the inner tube inside the outer tube,
- engaging the pipe (T) in the first connector (3), the inner tube (1) and the second connector (12) to define the first duct (101) and the second duct (102),
- connecting the connector to the heat transfer fluid circuit.
